# EUROPEAN PATENT APPLICATION

(11) **EP 2 555 517 A1**
(43) Date of publication of application: **06.02.2013**
(21) Application number: 11176184.7
(22) Date of filing: 01.08.2011
(51) Int. Cl.: H04N 7/18

(54) **Network video server and video control method thereof**

(71) Applicant: Hunt Electronic Co., Ltd., Keelung (TW)
(72) Inventor: LEE, Shin-Rong, Keelung (TW)
(74) Representative: Pallini, Diego

(57) **Abstract**

A network video server (20) receives multiple sets of streaming data respectively transmitted from multiple network cameras (10) connected with the network video server (20). Each set of streaming data has a piece of first streaming data having a first image resolution and a piece of second streaming data having a second image resolution being lower than the first image resolution. The network video server (20) decodes the piece of first streaming data from one of the network cameras (10) into a frame of video data and outputs the frame of video data during a full-screen mode, and combines the decoded pieces of second streaming data from all network cameras (10) into a frame of video data and outputs the frame of video data during a split-screen mode. Accordingly, the sharpness and smoothness of video frames is secured during the full-screen and split-screen modes.

## Description

### 1. Field of the Invention

The present invention relates to a network video server and a video control method thereof, and more particularly to a network video server and a video control method that output clear and smooth frames under a full-screen mode and a split-screen mode.

### 2. Description of the Related Art

For protection against burglary, most residential and business places and the like are equipped with anti-burglary security system. Among them, exhibition venues and museums additionally own surveillance systems for recording, playback and monitoring.

Regular surveillance system includes multiple cameras and a video server. Each camera is connected to the video server through a cable to transmit the taken video data to the video server for recording. Boosted by technological and Internet development, the cameras in the surveillance system and the video server have respectively evolved into web cameras and the digital network video server. The video data taken by each web camera are converted into streaming data and the streaming data are transmitted to the digital network video server for storage. When performing the playback function, the digital network video server decodes the stored streaming data into video data and then outputs the video data to a display device to play back the video data.

To secure the sharpness of frames during playback, the network video server can be set at a mode to output streaming data with higher resolution, such as D1 resolution. However, streaming data with higher resolution surely have massive data volume to be processed and the performance of the network video server is thus significantly degraded upon decoding the streaming data especially when real-time video data are being played. What is worse is that the network video server likely decodes the streaming data into incomplete video data, causing discontinuous frames and serious frame lag on a display device.

On the other hand, to smoothly play video frames during playback, the network video server can be set at a mode to output streaming data with lower resolution, such as CIF resolution. Although continuous and uninterrupted frames displayed on the screen can be achieved, the video frames may be blurred and unclear due to the lower resolution of the streaming data.

A first objective of the present invention is to provide a video control method of a video server that outputs clear and smooth frames under a full-screen mode and a split-screen mode.

To achieve the foregoing objective, the video control method receives multiple sets of streaming data. Each set of streaming data has a piece of first streaming data and a piece of second streaming data. Each piece of first streaming data has a first image resolution, each piece of second streaming data has a second image resolution, and the first image resolution is higher than the second image resolution. The video control method has a full-screen mode and a split-screen mode.

The full-screen mode extracts and decodes the piece of first streaming data from one set of the sets of streaming data into a frame of video data and outputs the frame of video data during the full-screen mode.

The split-screen mode extracts and decodes the piece of second streaming data from each set of streaming data into a piece of video data, combines the decoded pieces of video data into a frame of video data, and outputs the frame of video data during the split-screen mode.

A second objective of the present invention is to provide a processor, multiple video transmission ports, a storage unit, a decoding unit, an output port and a user interface.

The video transmission ports are connected to the processor and receive the sets of streaming data.

The storage unit is connected with the processor and controlled by the processor to store the sets of streaming data received by the video transmission ports in the storage unit.

The decoding unit is connected with the processor to decode either one of the pieces of first streaming data and the pieces of second streaming data of the sets of streaming data into the frame of video data and then output the frame of video data.

The output port is connected with the decoding unit and outputs the decoded video data.

The user interface receives an operation command and transmits the operation command to the processor for the processor to control the network video server to operate in accordance with the operation command.

The processor receives the piece of first streaming data of one preset set of the sets of streaming data from a corresponding video transmission port in accordance with the operation command outputted from the user interface, transmits the piece of first streaming data to the decoding unit for the decoding unit to decode the piece of first streaming data into the frame of video data, and outputs the frame of video data during the full-screen mode.

The processor receives the piece of second streaming data of each set of streaming data from a corresponding video transmission port in accordance with the operation command outputted from the user interface, transmits the piece of second streaming data of each set of the sets of streaming data to the decoding unit for the decoding unit to decode the piece of second streaming data of each set of streaming data into the piece of video data, combines the pieces of video data into the frame of video data and outputs the frame of video data during the split-screen mode.

To secure the smoothness of video frames when the video frames are displayed in a split-screen mode, the network video server simply decodes the second streaming data having a lower resolution to reduce the overhead of the network video server. To secure the sharpness of video frames when the video frames are displayed in a full-screen mode, the network video server decodes the first streaming data having a higher resolution instead to output video frames with higher definition. Accordingly, the performance of the network video server can be balanced in consideration of clear and smooth video frames during the full-screen mode and the split-screen mode.

Other objectives, advantages and novel features of the invention will become more apparent from the following detailed description when taken in conjunction with the accompanying drawings.

### IN THE DRAWINGS

Fig. 1 is a schematic view of a network video server in accordance with the present invention applied to a network surveillance system; and
Fig. 2 is a functional block diagram of the network video server in Fig. 1.

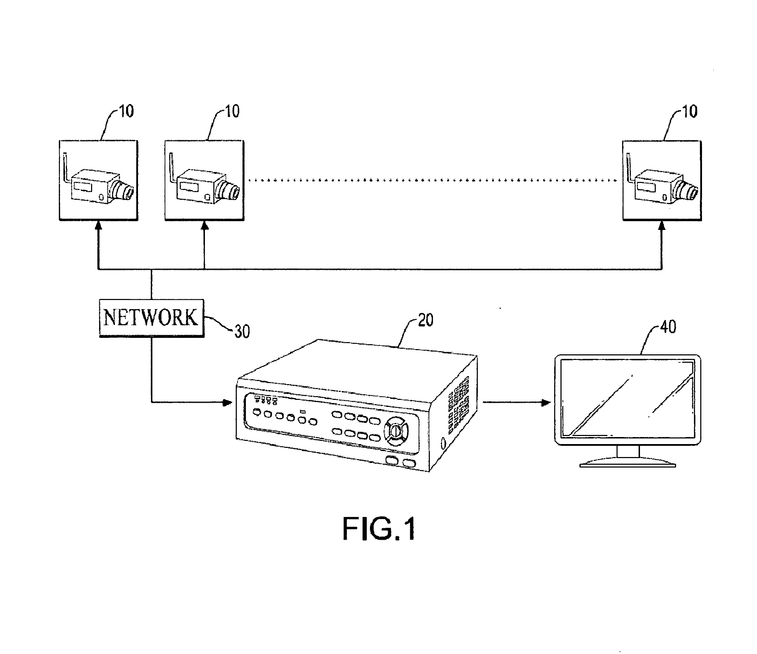

With reference to Fig. 1, a network video server 20 in accordance with the present invention is applied to a network surveillance environment, is connected to multiple network cameras 10 through a network 30 and respectively receives multiple sets of streaming data from the network cameras 10. Each set of streaming data has a piece of first streaming data and a piece of second streaming data outputted from each network camera 10. The piece of first streaming data and the piece of second streaming data of each set of streaming data respectively have a first image resolution and a second image resolution, and the first image resolution is higher than the second image resolution. For example, the first image resolution may comply with the D1 resolution or 720x480 pixels, 2M resolution or 1600x1200 pixels, or 1.3M resolution or 1280x1024 pixels, and the second image resolution may comply with CIF (Common Intermediate Format) resolution or 360x240 pixels.

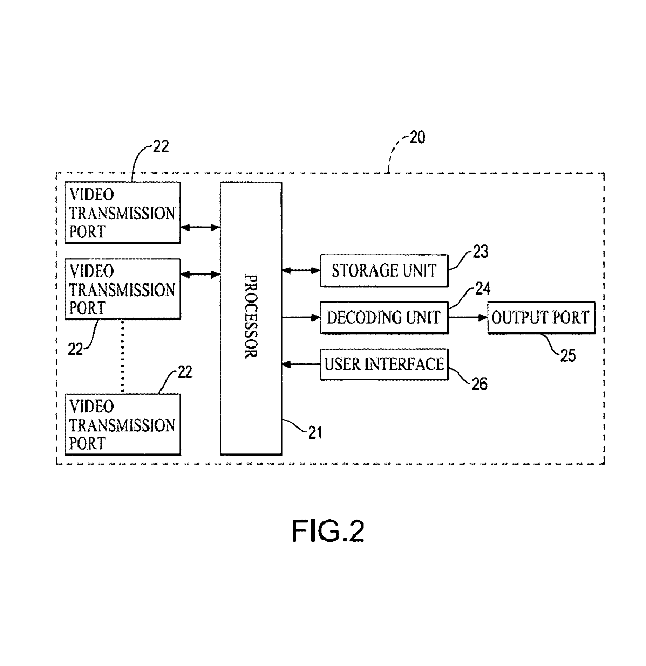

With reference to Fig. 2, the network video server 20 has a processor 21, multiple video transmission ports 22, a storage unit 23, a decoding unit 24, an output port 25 and a user interface 26.

The processor 21 executes a video control process. The video transmission ports 22 are connected with the processor 21 and adapted to respectively connect to the network cameras 10 through the network 30 and respectively receive the sets of streaming data from the network cameras 10. The storage unit 23 is connected with the processor 21 and controlled by the processor 21 to store the sets of streaming data respectively received from the video transmission ports 22 in the storage unit 23. The decoding unit 24 is connected with the processor 21 to decode the pieces of first streaming data or the piece of second streaming data into a piece of video data and then output the piece of video data. The output port 25 is connected with the decoding unit 24 and is adapted to connect with a display device 40 to transmit the piece of video data processed by the decoding unit 24 to the display device 40. The user interface 26 serves to receive an operation command for operating the network video server 20 and transmit the operation command to the processor 21 for the processor 21 to control the network video server 20 to operate in accordance with the operation command. For example, users can set the network video server 20 to be in a real-time mode or in a playback mode through the operation of the user interface 26. During the real-time mode, the processor 21 receives the sets of streaming data from the video transmission ports 22, transmits the pieces of first streaming data or the pieces of second streaming data to the decoding unit 24 and controls the decoding unit 24 to decode the pieces of first streaming data or the pieces of second streaming data into video data and then output the video data. During the playback mode, the processor 21 retrieves and transmits the pieces of first streaming data or the pieces of second streaming data stored in the storage unit 23 to the decoding unit 24 and controls the decoding unit 24 to decode the pieces of first streaming data or the piece of second streaming data into video data and then output the video data.

The video control process executed by the processor 21 is applicable when the network video server 20 is in the real-time mode or in the playback mode, and has a full-screen mode and a split-screen mode selected through the operation of the user interface 26. When the full-screen mode is selected, a network camera 10 is further selected through the operation of the user interface 26. The processor 21 receives the piece of first streaming data outputted by the selected network camera 10 from a corresponding video transmission port 22 when the network video server 20 is in the real-time mode, or retrieves the piece of first streaming data associated with the selected network camera 10 in the storage unit 23 when the network video server 20 is in the playback mode. The processor 21 further transmits the received or retrieved first piece of streaming data to the decoding unit 24 for the decoding unit 24 to decode the pieces of first streaming data into a frame of video data to be displayed for the full-screen mode and then transmit the frame of video data to the output port 25. When the split-screen mode is selected, all network cameras 10 are selected automatically. The processor 21 receives the piece of second streaming data outputted by each network camera 10 from a corresponding video transmission port 22 when the network video server 20 is in the real-time mode, or retrieves the piece of second streaming data associated with the network camera 10 in the storage unit 23 when the network video server 20 is in the playback mode. The processor 21 further transmits the received or retrieved piece of second streaming data to the decoding unit 24 for the decoding unit 24 to decode the piece of second streaming data into a piece of video data, combine the pieces of video data of all network cameras 10 into a frame of video data to be displayed for the split-screen mode and then transmit the frame of video data to the output port 25. During the split-screen mode, each frame of video data can be divided into multiple sub-windows being identical to the network cameras 10 in number. For example, if there are 16 network cameras 10, each frame of video data contains 16 sub-windows.

The processor 21 can be physically implemented by a multi-thread approach. For example, assume that there are four network cameras 10. As each network camera 10 simultaneously outputs a piece of first streaming data and a piece of second streaming data at one time, eight threads are required between the processor 21 and the video transmission ports 22 to simultaneously receive the pieces of first streaming data and second streaming data of the network cameras 10 and store the pieces of first and streaming data in the storage unit 23. Also, eight threads are required between the processor 21 and the decoding unit 24 to transmit the pieces of first and second streaming data from the processor 21 to the decoding unit 24, and at least one thread is required between the processor 21 and the storage unit 23 to retrieve the first and second streaming data from the storage unit 23.

When the network video server 20 is in the real-time mode and the split-screen mode, the processor 21 employs four of the threads between the processor 21 and the video transmission ports 22 to transmit the pieces of second streaming data received from the video transmission ports 22 to the decoding unit 24 through the four threads. When the network video server 20 is in the real-time mode and the full-screen mode, the processor 21 employs one of the threads between the processor 21 and the video transmission ports 22 to transmit the pieces of second streaming data received from a corresponding video transmission port 22 to the decoding unit 24 through the thread. The operation of the processor 21, when the network video server 20 is in the playback mode and also in the split-screen mode or the full-screen mode, is basically similar to that when the network video server 20 is in the real-time mode and also in the split-screen mode or the full-screen mode, except that the processor 21 still needs to use the thread between the processor 21 and the storage unit 23 to retrieve required streaming data. Since the real-time mode and the playback mode of the network video server 20 do not concurrently exist, only four of the threads between the processor 21 and the decoding unit 24 are required to transmit the corresponding streaming data from the processor 21 to the decoding unit 24. Accordingly, the program coding can be simplified and more memory can be saved so that the overall operating performance of the network video server 20 is enhanced.

In sum, the present invention simultaneously receives a piece of streaming data with a high resolution, such as D1, 2M or 1.3M resolution, and a piece of streaming data with a low resolution, such as CIP resolution, at one time from each network camera 10. When users watch a split-screen display taken by the network cameras 10 in the real-time mode or in the playback mode, as long as the network video server 20 is in the split-screen mode, the network video server 20 decodes the second streaming data from each network camera 10 and combines all the decoded second streaming data to form and output a frame of video data so as to reduce the overhead of the network video server 20 and secure the smoothness in displaying the frame of video data. When users watch a full-screen display taken by one of the network cameras 10 in the real-time mode or in the playback mode, as long as the network video server 20 is in the full-screen mode, the network video server 20 decodes the first streaming data from the network camera 10 and forms and outputs a frame of video so as to secure the sharpness of the outputted frames. Accordingly, the present invention can provide desired resolution and performance tailored to an actual surveillance consideration to output clear and smooth frames of video data in the full-screen mode and split-screen mode.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A video control method of a video server that receives multiple sets of streaming data, wherein each set of streaming data has a piece of first streaming data and a piece of second streaming data, each piece of first streaming data has a first image resolution, each piece of second streaming data has a second image resolution, and the first image resolution is higher than the second image resolution; **characterized in that** the video control method comprises:
a full-screen mode extracting and decoding the piece of first streaming data from one set of the sets of streaming data into a frame of video data and outputting the frame of video data during the full-screen mode; and
a split-screen mode extracting and decoding the piece of second streaming data from each set of streaming data into a piece of video data, combining the decoded pieces of video data into a frame of video data, and outputting the frame of video data during the split-screen mode.

2. The video control method as claimed in claim 1, wherein
the full-screen mode selectively decodes the piece of first streaming data of one set of a preset received set of streaming data and a previously received set of streaming data into the frame of video data, and outputs the frame of video data during a full-screen mode since the previously received set of streaming data is further stored in the video server, and
the split-screen mode decodes the piece of second streaming data of one of each preset received set and each previously received set of streaming data into a piece of video data, combines the decoded pieces of video data into the frame of video data, and outputs the frame of video data since each previously received set of streaming data is further stored in the video server.

3. A network video server executing the video control method as claimed in claim 1, comprising:
a processor (21);
multiple video transmission ports (22) connected to the processor (21) and receiving the sets of streaming data;
a decoding unit (24) connected with the processor (21) to decode either one of the pieces of first streaming data and the pieces of second streaming data of the sets of streaming data into the frame of video data and then output the frame of video data;
an output port (25) connected with the decoding unit (24) and outputting the decoded video data; and
a user interface (26) receiving an operation command and transmitting the operation command to the processor (21) for the processor (21) to control the network video server (20) to operate in accordance with the operation command;
**characterized in that**
the processor (21) receives the piece of first streaming data of one preset set of the sets of streaming data from a corresponding video transmission port (22) in accordance with the operation command outputted from the user interface (26), transmits the piece of first streaming data to the decoding unit (24) for the decoding unit (24) to decode the piece of first streaming data into the frame of video data, and outputs the frame of video data during the full-screen mode, and
the processor (21) receives the piece of second streaming data of each set of streaming data from a corresponding video transmission port (22) in accordance with the operation command outputted from the user interface (26), transmits the piece of second streaming data of each set of the sets of streaming data to the decoding unit (24) for the decoding unit (24) to decode the piece of second streaming data of each set of streaming data into the piece of video data, combines the pieces of video data into the frame of video data and outputs the frame of video data during the split-screen mode.

4. The network video server as claimed in claim 3, further comprising a storage unit (23) connected with the processor (21) and controlled by the processor (21) to store the sets of streaming data received by the video transmission ports (22) in the storage unit (23), wherein
the processor (21) receives the piece of first streaming data of the preset set of the sets of streaming data from the corresponding video transmission port (22) or retrieves the piece of first streaming data of the preset set of streaming data from the storage unit (23) in accordance with the operation command outputted from the user interface (26), transmits the piece of first streaming data to the decoding unit (24) for the decoding unit (24) to decode the piece of first streaming data into the frame of video data, and outputs the frame of video data during the full-screen mode, and
the processor (21) receives or retrieves the piece of second streaming data of each set of the sets of streaming data from the corresponding video transmission port (22) or the storage unit (23) in accordance with the operation command outputted from the user interface (26), transmits the piece of second streaming data of each set of streaming data to the decoding unit (24) for the decoding unit (24) to decode the piece of second streaming data of each set of streaming data into the piece of video data, combines the pieces of video data into the frame of video data and outputs the frame of video data during the split-screen mode.

5. The network video server as claimed in claim 3, further comprising:
multiple first threads executed between the processor (21) and the video transmission ports (22), being twice as many as the video transmission ports (22), and respectively transmitting the pieces of first streaming data and the pieces of second streaming data of the sets of streaming data respectively received from the video transmission ports (22) to the processor (21); and
multiple second threads executed between the processor (21) and the decoding unit (24), being twice as many as the video transmission ports (22), and respectively transmitting the pieces of first streaming data and the pieces of second streaming data of the sets of streaming data from the processor (21) to the decoding unit (24).

6. The network video server as claimed in claim 4, further comprising:
multiple first threads executed between the processor (21) and the video transmission ports (22), being twice as many as the video transmission ports (22), and respectively transmitting the pieces of first streaming data and the pieces of second streaming data of the sets of streaming data respectively received from the video transmission ports (22) to the processor (21); and
multiple second threads executed between the processor (21) and the decoding unit (24), being identical to the video transmission ports (22) in number, and respectively transmitting one of the pieces of first streaming data and the pieces of second streaming data of the sets of streaming data from the processor (21) to the decoding unit (24).

7. The network video server as claimed in claim 5, further comprising:
multiple first threads and a third thread executed between the processor (21) and the video transmission ports (22), wherein the first threads are twice as many as the video transmission ports (22), and respectively transmit the pieces of first streaming data and the pieces of second streaming data of the sets of streaming data respectively received from the video transmission ports (22) to the processor (21), and the third thread retrieves the sets of streaming data from the storage unit (23); and
multiple second threads executed between the processor (21) and the decoding unit (24), being twice as many as the video transmission ports (22), and respectively transmitting the pieces of first streaming data and the pieces of second streaming data of the sets of streaming data from the processor (21) to the decoding unit (24).

8. The network video server as claimed in claim 6, further comprising:
multiple first threads and a third thread executed between the processor (21) and the video transmission ports (22), wherein the first threads are twice as many as the video transmission ports (22), and respectively transmit the pieces of first streaming data and the pieces of second streaming data of the sets of streaming data respectively received from the video transmission ports (22) to the processor (21), and the third thread retrieves the sets of streaming data from the storage unit (23); and
multiple second threads executed between the processor (21) and the decoding unit (24), being identical to the video transmission ports (22) in number, and respectively transmitting one of the pieces of first streaming data and the pieces of second streaming data of the sets of streaming data from the processor (21) to the decoding unit (24).
